# EUROPEAN PATENT APPLICATION

(11) **EP 1 195 975 A2**
(43) Date of publication of application: **10.04.2002**
(21) Application number: 01308098.1
(22) Date of filing: 24.09.2001
(51) Int. Cl.: H04M 3/493

(54) **Call setup by translating a text message into telephone number**

(30) Priority: 25.09.2000 GB 0023463
(71) Applicant: INTELLPROP LIMITED, Guernsey, Channel Islands (GB)
(72) Inventor: Wilson, Jeffrey, Fareham, Hampshire PO16 7OH (GB)
(74) Representative: Pilch, Adam John Michael

(57) **Abstract**

Services apparatus for use with a mobile telephone system provides a dialling system providing simplified access to services or other terminals. A dialling decoder and database receives a text message from a mobile station MS and identifies the text message as a request for call connection to a telephone number associated with the text message. A call connection system outdials to that telephone number and also to the mobile station MS, and connects the two calls. An identification signal characteristic of the telephone number of the mobile station MS is also sent to the telephone number associated with the received text message.

## Description

This invention relates to a telecommunications services apparatus for use with a mobile telecommunications system, such as a mobile telephone system.

Users of mobile telephones can have access to a wide variety of voice services, including network-based services such as voicemail and information/entertainment services such as live radio feeds.

Normally, users access these services by originating a call to the service delivery equipment by dialling a string of digits representing the telephone number of the service. Most people have difficulty memorising more than a few telephone numbers and therefore use various forms of directory to provide a translation from meaningful alphanumeric name to digit string.

In the case of mobile telephone users, the directory or 'phonebook' contained within the handset is most useful. However if a service is called infrequently the user may not have stored the number, either because of capacity limitations or because future use was not foreseen. Later, when the service is required, obtaining the number from other sources may be difficult, especially if the user is away from home or office.

In another branch of communications, the same problem of using long digit strings to identify Internet websites has been very effectively overcome by allowing users to enter alphanumeric addresses (domain names) of the form "www.companyname.com". Such addresses are translated within the Internet network to the required numeric strings. Furthermore, Internet search engines are available so that when a user cannot remember or does not know the required domain name, an approximation or keyword can be entered to enable intelligent identification of potentially desired websites.

It would be highly desirable if a similar scheme were available to enable access to telephone services via alphanumeric addresses.

Some attempts to overcome this problem have been made with personal numbers and particularly freephone numbers. For example, generic identifiers in the UK such as 0800 FLOWERS are used to route calls to a specific florist, or (with Intelligent Network number translation facilities) to the florist nearest to the caller. Specific identifiers, such as 0800 TELSIS, can be dialled to reach a particular company or organisation.

In such cases, the organisation 'owning' the alphanumeric address has in fact 'bought' a telephone number where the digits correspond to the letters usually printed on a telephone keypad. Thus 0800 TELSIS is actually 0800 835747. A drawback of this approach is that, because each of the digit keys represents several letters, other organisations may not be able to use the same scheme - for example 0800 VEKRIS is also 0800 835747. Thus utilisation of the significantly increased address space offered by alphanumeric addressing is severely limited.

Other drawbacks of the '0800 TELSIS' approach include the fact that a number of different layouts for letters on telephone keypads are in use throughout the world. Whilst the situation has been eased in recent times with the introduction of an ISO standard, organisations may still have to promote both alpha and numeric telephone numbers, e.g. '0800 TELSIS (835747)'.

In addition, callers who are not in the 'home' country have difficulty in accessing such numbers. For example, somebody in the Netherlands wishing to call Telsis in the UK would normally have to dial the international access code, followed by the country code and then the UK telephone number (without the leading zero), i.e. 0044 800 TELSIS. This means that the caller would have to know where Telsis is located and the appropriate country code and number format.

Even if these are known, access is unlikely to be permitted because 0800 is a freephone code and, even where networks allow it, the organisation may not wish to accept the charges resulting from international calls.

An attempt to overcome these difficulties and restrictions has been made through introduction of the Universal Freephone service in which a logical country code of 800 has been allocated. Thus dialling 00 800 00 TELSIS could allow access to Telsis from any country supporting the Universal Freephone service, but in practice the organisation has to arrange for the particular Universal Freephone number to be activated in every country from which it is prepared to accept calls. The points made above regarding name/number clashes (TELSIS/VEKRIS) and inefficient use of the potential address space are still valid for Universal Freephone, and in addition the caller must remember the exact number format, i.e. 00 800 00 .... in this case.

As can be seen, numeric numbering schemes within the world's telecoms networks are inherently restrictive, resulting in an impaired service to users and reduced network revenues. The restrictions could be overcome with a means to easily use alphanumeric addressing.

As discussed above, it is possible to use alphanumeric representations of telephone numbers but with significant limitations.

Mobile telephones typically have a directory of 'phonebook' facilities which enable telephone numbers and appropriate alphanumeric identifiers to be stored within the handset. As discussed, these have limited capacity and a required telephone number may not be stored.

It is normally possible to store a single number which can access a service or destination from any country. For example, (unlike a call from the fixed network) +44 1489 885877 will reach the required destination whether the call is made from within the UK or overseas. However should the number change, e.g. through a national code change, then the user will have to edit the mobile handset phonebook entry.

Mobile handsets have another facility which can be used to overcome some of these limitations - the Short Message Service (SMS) forming part of the GSM standard enables alphanumeric text messages to be sent to a destination. This destination can be a system including a database which can provide information in response to a query.

For example, the SMS text 'TRAINS' could be sent - the system would reply by sending a message such as 'Train Enquiries on 08457 484950' back to the handset. In another example the SMS text 'TAXIS FAREHAM' could be sent - the mobile handset would then receive an SMS reply providing a list of taxi companies in the Fareham area, together with their phone numbers.

The mobile phone user can then call a selected number, either by keying in the number again or by using the 'Use Number' facility available in some handsets which enables extraction of numbers from SMS messages for immediate use in dialling.

A disadvantage of this approach is that it may not allow simple, straightforward use when roaming - it may be necessary for the mobile user to include the international access code and country code and to remove the leading digit of the number, for example. A situation where this might arise is with an international traveller wishing to arrange for a local taxi company to collect him from the airport when he arrives home. The standard taxi number service would use national telephone numbers rather than international, so as not to confuse the majority of users.

Another example of the limitation of this facility is in accessing services which are normally reached by dialling a short code when connected to the home network. Such services may include voicemail, customer services, and information/entertainment services. Current limitations of mobile networks with respect to international call handling mean that, in the majority of cases, calls to a short code are not passed through the international gateway.

Furthermore, current limitations of international call handling mean that the caller's CLI is often not delivered to a destination. This can restrict access to certain services and destinations.

According to the invention there is provided a telecommunications services apparatus for use with a mobile radio telecommunications system, said apparatus comprising:
a text message decoder for receiving a text message from a mobile station of the mobile radio telecommunications system, and for identifying the received text message as a request for call connection to a telephone number associated with the received text message; and
a call connection means for outdialling to said telephone number associated with the received text message and to said mobile station, and for connecting said telephone number and said mobile station, said call connection means also sending an identification signal characteristic of the telephone number of said mobile station to said telephone number associated with the received text message.

Preferably, the text message decoder includes a database linking text identifiers with respective telephone numbers. Means may be provided for accessing at least one external database linking further text identifiers with respective further telephone numbers. The call connection means may be operable to connect the calling mobile station to the respective voice mailbox provided by the system.

The invention will now be described by way of example with reference to the accompanying drawings, throughout which like parts are referred to by like references, and in which:
Figure 1 is a block diagram of a telecommunications services apparatus in accordance with an embodiment of the invention, comprising an alpha dialling system;
Figure 2 is a block diagram showing a network configuration of the dialling system; and
Figure 3 is a diagram showing a possible database structure.

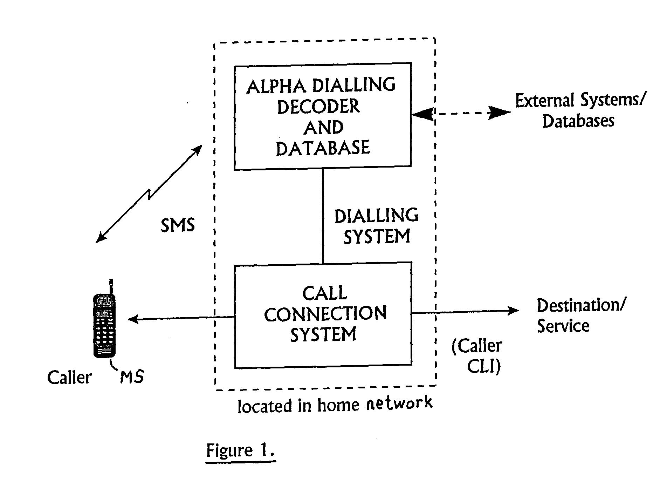

Referring to Figure 1, there is shown a dialling system comprising a call connection system CCS and an alpha dialling decoder and database ADDD. The call connection system provides communication with a mobile station (caller) MS, and with a destination/service.

The mobile user compiles an SMS text message which merely comprises an identifier for the required service. The message is sent via the normal mobile telephone network to the ADDD. This system performs a database look-up to obtain a telephone number which corresponds to the text identifier. The ADDD sends this number (which represents the destination), together with the Calling Line Identity of the mobile handset which sent the SMS text, to the CCS. The CCS dials out to the mobile (which may be anywhere in the world where there is a roaming arrangement with its home network) and, once connected, dials out to the destination number. The two call legs are connected together within the CCS so that the mobile user is connected to the required destination or service. To ensure that the called party or system is aware of who's calling, the CCS establishes the outdialled call to the destination or service with the CLI (Calling Line Identity) of the caller.

In this way, the user merely has to enter an identifier for the required service and send it by SMS to the dialling system, the access number for which may be a memorable short code or even a single number stored within the mobile stations phonebook. Everything else involved in connecting the caller to the required service is fully automatic.

It is anticipated that the dialling system is located in the user's home network as this would readily enable connection to services normally accessed by short codes within the home network.

Examples of usage of the dialling system may include:

| | |
|---|---|
| RADIO4 | connects to a live feed of BBC Radio 4 |
| CRICKET | connects to a service providing latest cricket scores |
| VM (or VOICEMAIL) | Connects to the user's voicemail system, which may be particularly useful overseas when a short access code is not available |
| CS (or CUSTOMER SERVICE or HELP) | connects to the home network operator's customer service centre |
| RAC | connects to a motoring organisation |
| TELSIS | connects to organisation |
| BOSCH DISHWASHER | connects to appropriate help desk within company for specified product support |
| ARCHERS | connects to a time-shifted recording of a favourite radio programme |
| HOME | connects to the user's home (with the benefit that CLI is passed on) |

Use of the dialling system may be charged for in a number of ways. In normal circumstances the caller would pay for the SMS text transmission. The network operator may wish to charge for both call legs (i.e. back to the mobile and onward to destination) or only one call leg depending upon the type of service accessed. Furthermore, the call may be charged to the mobile user or to the destination, or to a combination. All of the information required for billing is provided by the CCS including the CLI of the caller.

The database within the ADDD may contact multiple entries for the same service. For example,
RADIO4
RADIO 4
R4
BBC RADIO4
BBC RADIO 4
BBC R4
may all point to the same service, and the ADDD may also incorporate intelligent text analysis so that other forms of the same request could be understood.

The system may generate service usage statistics such as information regarding the number of calls to particular services and the text identifiers used to access them. In addition, the system can report all text identifiers for which there is no entry in the database. This will enable the network operator or service provider to determine whether alternative text identifiers need to be added to the database to enable access to existing services, or whether there is a demand for additional services.

In addition, it is anticipated that the dialling system may support 'intelligent interaction' to assist the user gaining access to services. For example, the user may send the identifier 'RADIO FOUR', which may not be in the database. In-built intelligence would determine that the 'FOUR' could be represented by '4' and the system would send an SMS message back to the user with contents of the form
*RADIO FOUR is not recognised. Do you require RADIO 4 ?*
*If so, just reply to this message without changing the contents.*

The re-transmitted message would be identified and the user connected to the appropriate service just as if they had sent 'RADIO 4'.

These facilities enable maximisation of service availability and system usage, with consequent customer satisfaction and revenue generation.

System usage can also be monitored on an individual user basis, and this may enable the system to build up preference lists so that personal services can be offered.

Indeed, it is envisaged that the system supports personalisation at the network level (for example, UK BT Cellnet customers may have their VM or VOICEMAIL entry translated to 901 or 902 depending upon whether they use standard voicemail or 'voicemail plus').

In addition, the user is able to set up their own personal database entries, such as HOME. This enables users to take advantage of the system's ability to deliver CLI even when the user is roaming on a foreign network - overcoming the problem of not being able to call home (or other destinations) because calls are either automatically or manually rejected because no CLI is presented.

Alphanumeric identifiers and the telephone numbers to which they translate may be held either in the ADS database or in an external system or database. Typically, when an SMS message is received with an identifier, the user's 'personal' database entries are searched first and if no match is obtained the 'network' database is checked.

Typically, the user submits personalised database entries to the system using SMS, but a variety of other methods are possible, including
- manually, via a customer services agent
- via a web interface
- via WAP (Wireless Application Protocol) messaging
- via email
- via an interactive voice service

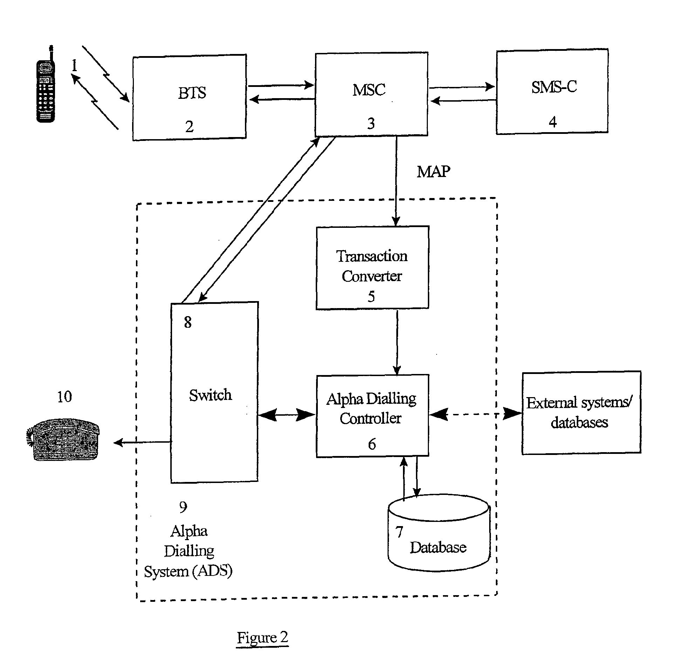

Figure 2 shows a mobile station MS(1) communicating with a network comprising a base transceiver station BTS (2), a mobile switching centre MSC (3) and a short message service centre SMS-C (4). The network communicates via the Mobile Application Protocol MAP with a dialling system (9) embodying the invention. The dialling system (9) includes a transaction converter (5), an alpha dialling controller (6), a database (7) and a switch block (8). The switch block (8) provides communication to a selected external telephone (10) or service. The controller (6) may be connected to external systems and/or databases, as shown.

In Figure 2, the mobile user having the mobile station (1) wishes to listen to a time shifted copy of the most recent episode of The Archers radio programme and so sends the SMS message "ARCHERS" to the dialling system (9). The text message is received by the base transceiver station (3). This is passed to the SMS-C (4), which sends an SMS message in a MAP message to the transaction converter (5) via the MSC (3).

The transaction converter (5) extracts the contents and passes them to the alpha dialling controller (6).

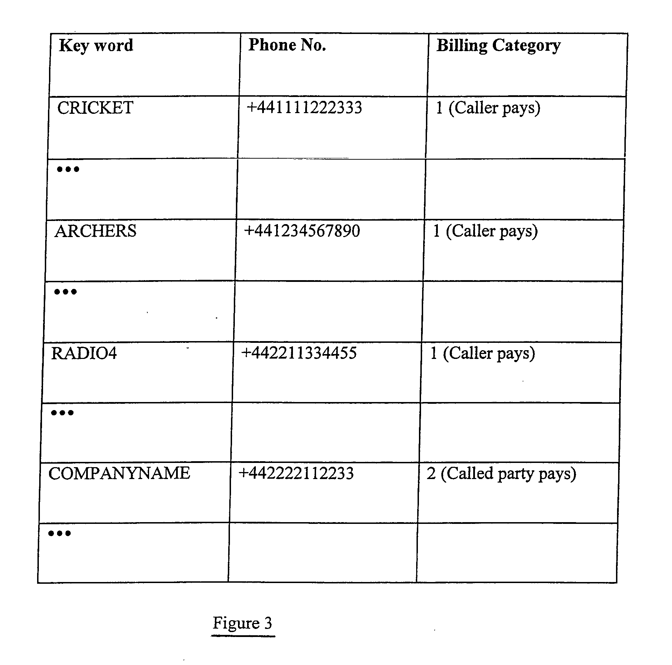

In the preferred embodiment, the controller (6) uses a hashing algorithm to locate the position of the word "ARCHERS" in the database (7). A possible database structure is shown in Figure 3. This provides the telephone number for the ARCHERS service and the billing category. Other search algorithms and implementations of the database are possible.

The dialling controller (6) now passes the user's CLI (attached to the SMS message), the service telephone number and the billing category to the switch block (8). The switch block (8) then makes two outdial telephone calls, one to the user (8, 3, 2, 1) and another to the ARCHERS service (8, 10).

The type of billing will be determined by the billing category. Likely billing categories are (1) User pays for both calls, (2) Called party pays for both calls or (3) the mobile network pays for both calls (free network services). In some circumstances the billing may be shared by the different parties. In one case, whitelists may be used so that billing is not only service dependent but also dependent upon the CLI of the caller.

In the system diagram of Figure 2, the service (10) is shown as a fixed line telephone. In practice, this may be an automatic service providing the audio source (for example, the time shifted Archers episode). It could also be a mobile telephone.

## Claims

1. A telecommunications services apparatus for use with a mobile radio telecommunications system, said apparatus comprising:
a text message decoder for receiving a text message from a mobile station of the mobile radio telecommunications system, and for identifying the received text message as a request for call connection to a telephone number associated with the received text message; and
a call connection means for outdialling to said telephone number associated with the received text message and to said mobile station, and for connecting said telephone number and said mobile station, said call connection means also sending an identification signal characteristic of the telephone number of said mobile station to said telephone number associated with the received text message.

2. Apparatus according to claim 1, wherein the text message decoder includes a database linking text identifiers with respective telephone numbers.

3. Apparatus according to claim 1 or claim 2, including means for accessing at least one external database linking further text identifiers with respective further telephone numbers.

4. Apparatus according to claim 1, claim 2 or claim 3, wherein the call connection means is operable to connect the mobile station to the respective voice mailbox provided by the mobile radio telecommunications system.
